# FASCICULE DE BREVET EUROPEEN

(11) **EP 2 633 357 B1**
(45) Date de publication et mention de la délivrance du brevet: **07.12.2016**
(21) Numéro de dépôt: 11785747.4
(22) Date de dépôt: 25.10.2011
(51) Int. Cl.: G02B 21/33, G02B 21/00, G02B 21/36

(54) **METHODE D'OBSERVATION DE L'EMISSION DE LUMIERE D'UN ECHANTILLON PAR MICROSCOPIE OPTIQUE DYNAMIQUE**
VERFAHREN ZUR BEOBACHTUNG DER LICHTEMISSION AUS EINER PROBE MITTELS DYNAMISCHER OPTISCHER MIKROSKOPIE
METHOD OF OBSERVING THE EMISSION OF LIGHT FROM A SAMPLE BY DYNAMIC OPTICAL MICROSCOPY

(30) Priorité: 28.10.2010 FR 1058913
(43) Date de publication de la demande: 04.09.2013
(60) Demande divisionnaire: 16194311.3
(73) Titulaire: Centre National de la Recherche Scientifique, 75794 Paris Cedex 16 (FR)
(72) Inventeur: FORT, Emmanuel, F-94230 Cachan (FR); LEVEQUE FORT, Sandrine, F-94230 Cachan (FR); BALAA, Karla, 94160 Saint Mande (FR); BARROCA, Thomas, F-94800 Villejuif (FR)
(74) Mandataire: Cabinet Plasseraud
(86) Numéro de dépôt international: PCT/FR2011/052482
(87) Numéro de publication internationale: WO 2012/056160

(56) Documents cités:
- FR-A1- 2 943 428
- US-A1- 2010 243 914
- KURZBUCH D ET AL: "A biochip reader using super critical angle fluorescence", SENSORS AND ACTUATORS B, ELSEVIER SEQUOIA S.A., LAUSANNE, CH, vol. 137, no. 1, 28 mars 2009 (2009-03-28) , pages 1-6, XP025962237, ISSN: 0925-4005, DOI: DOI:10.1016/J.SNB.2008.12.057 [extrait le 2009-01-04]
- LAIB S ET AL: "Supercritical angle fluorescence biosensor for the detection of molecular interactions on cellulose-modified glass surfaces", APPLIED SURFACE SCIENCE, ELSEVIER, AMSTERDAM, NL, vol. 252, no. 22, 15 septembre 2006 (2006-09-15), pages 7788-7793, XP024892755, ISSN: 0169-4332, DOI: DOI:10.1016/J.APSUSC.2005.09.017 [extrait le 2006-09-15]
- VALIMAKI H ET AL: "A novel platform for highly surface-sensitive fluorescent measurements applying simultaneous total internal reflection excitation and super critical angle detection", CHEMICAL PHYSICS LETTERS, NORTH-HOLLAND, AMSTERDAM, NL, vol. 473, no. 4-6, 12 mai 2009 (2009-05-12), pages 358-362, XP026096426, ISSN: 0009-2614, DOI: DOI:10.1016/J.CPLETT.2009.04.010 [extrait le 2009-04-09]
- RUCKSTUHL T ET AL: "Supercritical angle fluorescence (SAF) microscopy", OPTICS EXPRESS, OSA (OPTICAL SOCIETY OF AMERICA), WASHINGTON DC, (US), vol. 12, no. 18, 6 septembre 2004 (2004-09-06), pages 4246-4254, XP002562614, ISSN: 1094-4087

## Description

La présente invention concerne une méthode d'observation de l'émission de lumière d'un échantillon par microscopie optique dynamique.

La lumière provenant de l'échantillon peut résulter d'une diffusion ou d'une fluorescence. La microscopie de fluorescence est une technique qui tire profit du phénomène de fluorescence pour observer divers composés. La fluorescence est la propriété que possèdent certains corps d'émettre de la lumière fluorescente par eux-mêmes.

La fluorescence d'un composé à observer peut être primaire si ce composé est fluorescent par lui-même (par exemple : chlorophylle, huile) ou secondaire quand on marque le composé à observer avec une substance fluorescente, dite fluorochrome ou marqueur fluorescent.

Notamment en biologie cellulaire, un grand nombre d'événements moléculaires intervenant à la surface des cellules sont étudiés en microscopie de fluorescence comme par exemple l'adhésion cellulaire, la fixation d'hormones sur des récepteurs de la membrane plasmique, la sécrétion de neurotransmetteurs ainsi que la dynamique membranaire (endocytose, exocytose).

Un dispositif de microscopie de fluorescence comprend usuellement une source de lumière pour l'excitation, des moyens pour séparer les photons d'excitation des photons d'émission, un système de lentilles pour collecter les photons et en général des moyens d'imagerie.

Les techniques de fluorescence peuvent être utilisées avec différents types de microscope notamment :
- un microscope optique classique où la lumière d'excitation peut passer par l'échantillon ou par l'objectif. Dans ce dernier cas, on parle alors de microscopie à épifluorescence ;
- un microscope confocal, par exemple à balayage laser qui permet notamment de réaliser des images en trois dimensions de l'échantillon ;
- un microscope de fluorescence par réflexion totale interne (en anglais :
   « total internai reflection fluorescence » usuellement appelée TIRF) qui utilise une onde évanescente pour n'exciter la fluorescence que sur une très faible profondeur, immédiatement adjacente à l'interface du support de l'échantillon (en général en verre) et du milieu liquide (en général de l'eau) dans lequel est disposé l'échantillon. L'éclairage est réalisé par un faisceau incident d'un laser suivant un angle surcritique pour créer une onde évanescente (exponentiellement décroissante orthogonalement à l'interface). Dans la présente demande les termes « surcritique » et « supercritique » ont le même sens.

La microscopie TIRF, bien qu'actuellement en plein essor et permettant des observations précises, présente néanmoins certains inconvénients. En effet l'utilisation d'une source laser adaptée se révèle onéreuse et le champ d'excitation ainsi généré peut ne pas être homogène (suite aux interférences provenant de la cohérence du faisceau). En outre on constate qu'un éclairage par l'objectif ne permet pas une excitation homogène et que la profondeur de pénétration résultante n'est pas constante sur l'ensemble du champ à observer. De plus, il existe des pertes de confinement du champ excitateur liées à la diffusion intrinsèque de la lumière par les cellules.

Le document FR-A-2943428 divulgue une méthode d'observation par microscopie de fluorescence d'un échantillon comprenant des composants fluorescents dans un milieu liquide d'indice de réfraction n_{L} disposé sur un support transparent d'indice de réfraction nₛ supérieur à n_{L} et inférieur ou égal à 1,55 et un dispositif d'observation comprenant un objectif plein champ à immersion dont l'ouverture angulaire numérique, ON, est supérieure ou égale à 1,33 et inférieure ou égale à nₛ et un ensemble de lentilles pour former une image dans au moins un plan image et qui comprend en outre un cache disposé dans le plan focal arrière de l'objectif à immersion ou dans un plan conjugué dudit plan focal arrière de manière à occulter les composantes d'émission de fluorescence de l'échantillon dans les directions angulaires où l'angle θ est inférieur ou égal à un angle critique θ_{c}, avec θ_{c} = arcsin (n_{L}/nₛ) et l'angle θ défini comme l'angle d'une direction angulaire d'émission de fluorescence par rapport à la direction perpendiculaire de la surface du support sur laquelle est disposé l'échantillon à observer.

Cette méthode d'observation permet d'obtenir des images de fluorescence de grande qualité avec un dispositif peu onéreux ou d'améliorer la qualité des images obtenues en microscopie TIRF.

Le dispositif et la méthode ci-dessus conduisent à des images très satisfaisantes possédant une bonne résolution. On peut néanmoins, dans certaines circonstances, souhaiter améliorer leur résolution.

La présente invention a pour but de fournir une méthode alternative permettant notamment d'améliorer sensiblement la résolution des images au prix de certaines modifications.

La solution de l'invention porte sur une méthode pour observer une émission de lumière d'un échantillon dans un milieu d'indice de réfraction n_{L}, l'échantillon étant disposé contre une surface d'un support transparent d'indice de réfraction nₛ supérieur à n_{L}, l'émission de lumière comprenant des composantes lumineuses d'amplitude et de phase données, orientées vers le support et formant un angle θ avec une direction perpendiculaire à la surface, parmi lesquelles, d'une part, des composantes lumineuses supercritiques pour lesquelles l'angle θ est strictement supérieur à un angle critique θ_{c} = arcsin (n_{L}/nₛ) et, d'autre part, des composantes lumineuses critiques ou sous-critiques, pour lesquelles l'angle θ est inférieur ou égal à l'angle critique θ_{c}, la méthode mettant en oeuvre un dispositif d'observation capable de :
- collecter au moins une partie de l'émission de lumière d'une région d'intérêt de l'échantilllon et obtenir un signal lumineux collecté comportant des composantes lumineuses issues des composantes lumineuses supercritiques de l'émission de lumière ;
- d'appliquer des filtres au signal lumineux collecté pour sélectivement diminuer l'amplitude et/ou modifier la phase de certaines composantes lumineuses du signal lumineux collecté pour obtenir un signal lumineux filtré ; et
- de transformer le signal lumineux filtré en une zone d'image de la région d'intérêt de l'échantillon ;
la méthode étant caractérisée en ce que :
- on réalise une modulation du signal lumineux filtré, dans lequel on laisse passer des composantes lumineuses issues des composantes lumineuses critiques ou sous-critiques de l'émission de lumière, pour obtenir des zones d'image d'une même région d'intérêt de l'échantillon, la modulation portant sur tout ou partie des composantes lumineuses du signal lumineux collecté issues des composantes lumineuses supercritiques de l'émission de lumière ; et
- on produit au moins une zone d'image utile de l'échantillon par combinaison des zones d'image, la combinaison mettant en évidence des différences entre les zones d'image liées à la modulation.

La lumière émise par l'échantillon peut résulter d'une fluorescence (après une excitation appropriée) ou bien d'une diffusion. Une partie de cette lumière est collectée par un dispositif d'observation, puis filtrée et transformée en zone d'image.

La région d'intérêt de l'échantillon est la partie de l'échantillon que l'on souhaite observer. Elle peut être étendue ou ponctuelle. Dans ce dernier cas, il est possible de reconstituer une image plus large par balayage de l'échantillon. Une zone d'image est une image d'une région d'intérêt de l'échantillon. Elle peut donc être une image complète de l'échantillon, ou bien une image d'une partie de l'échantillon, ou bien encore une image d'un point de l'échantillon. La modulation porte sur des zones d'image issues d'une même région d'intérêt de l'échantillon.

Grâce au dispositif selon l'invention, il est possible d'obtenir des images de microscopie avec une résolution améliorée, permettant par exemple d'obtenir des informations précieuses pour l'étude de matériaux biologiques.

L'amélioration de la résolution est obtenue, non pas en travaillant directement sur un signal lumineux expurgé de tout ou partie des composantes issues de la lumière émise par l'échantillon à des angles critiques ou sous-critiques, c'est-à-dire un signal riche en composantes issues de la lumière émise par l'échantillon à des angles supercritiques (méthode décrite par le document FR-A-2943428), mais en travaillant indirectement, par une modulation du signal portant sur les composantes issues de la lumière émise par l'échantillon à des angles supercritiques. La méthode est indirecte car elle exige de prendre plusieurs zones d'image de l'échantillon et de les combiner pour obtenir une zone d'image utile mettant en évidence les différences entre les zones d'image crées par la modulation du signal lumineux à l'origine des zones d'image.

La modulation portant sur tout ou partie des composantes lumineuses du signal lumineux collecté issues des composantes lumineuses supercritiques de l'émission de lumière, la combinaison renforce ces composantes lumineuses supercritiques dans la zone d'image utile. A contrario, les composantes du signal lumineux collecté issues de la lumière émise par l'échantillon à des angles critiques ou sous-critiques n'étant pas modifiées par la modulation, la combinaison atténue ces composantes critiques ou sous-critiques dans la zone d'image utile. La combinaison peut être vue comme une démodulation. Elle fait apparaître dans la zone d'image utile la contribution des composantes supercritiques modulées.

La modulation peut concerner l'amplitude des composantes lumineuses du signal lumineux collecté et/ou leur phase. Dit autrement, les filtres utilisés modifient l'amplitude des ondes lumineuses et/ou leur phase. C'est aussi le sens à donner au verbe « agir » quand il est employé au sujet des filtres dans la présente demande. Agir différemment, pour deux filtres, veut dire « réaliser une modulation ». La modification de l'amplitude peut être une atténuation plus ou moins forte, allant jusqu'à l'occultation. Certains des filtres utilisés (mais pas tous) peuvent être neutres et ne pas agir ; dans ce cas, le signal lumineux résultant est quand-même appelé « signal filtré », même s'il est identique au signal lumineux collecté. Par « laisser passer » des composantes lumineuses, on entend qu'après filtrage, les composantes subsistent, même sous une forme atténuée (amplitude réduite) ou avec une phase modifiée.

Les zones d'image, comme toute image formée à l'aide d'un capteur tel qu'une caméra contiennent une information d'intensité lumineuse liée au carré du module du signal lumineux filtré.

De manière inattendue, la résolution de la zone d'image utile obtenue peut être améliorée d'un facteur de l'ordre de 20 à 25%, notamment lorsque la modulation porte sur la totalité des composantes lumineuses du signal collecté issues des composantes lumineuses supercritiques de l'émission de lumière (voir explications de la figure 7 ci-dessous) par rapport à une zone d'image obtenue selon la méthode du document FR-A-2943428.

La prise de zones d'image, en vue d'obtenir une zone d'image utile, peut se faire simultanément, par exemple en dédoublant le signal lumineux collecté et en appliquant un filtre sur chaque doublon. La prise de zones d'images peut aussi être successive. Un signal lumineux est alors collecté et on lui applique successivement les filtres réalisant la modulation. On conserve une zone d'image correspondant à chaque signal lumineux filtré obtenu.

La méthode fournit au moins une zone d'image utile, mais elle peut être appliquée aussi souvent que nécessaire, à une cadence permise par le dispositif d'observation et les filtres mis en jeu, de façon à obtenir des zones d'images utiles à intervalles de temps donnés. Si les zones d'images correspondent à des points de l'échantillon, un balayage spatial de l'échantillon peut être réalisé.

L'invention permet d'obtenir des zones d'images avec une grande sensibilité, notamment de zones localisées à l'interface du support d'indice de réfraction nₛ et du milieu d'indice de réfraction n_{L}. On peut ainsi visualiser des événements se produisant près de cette interface, sur une certaine profondeur. Pour une interface verre/eau (n_{L}=1.33 et n_{S}=1.51 environ), la profondeur peut être environ 1/6 de la longueur d'onde, ou moins si l'on ne collecte que les composantes lumineuses les plus inclinées (les plus supercritiques) de la lumière émise, soit de l'ordre de 50 nm (nanomètres) à 100 nm pour des longueurs d'onde dans le visible.

Les supports communément utilisés en microscopie, notamment de flluorescence, sont en verre et il est possible de choisir des verres classiques, d'indice de réfraction inférieur ou égal à 1,55, dont le coût est faible, ou des verres d'indice plus élevé.

Un fluorochrome se comporte comme une antenne susceptible d'émettre un signal. Cet émetteur possède dans son environnement immédiat (quelques dizaines de nanomètres) des composantes électromagnétiques qui sont évanescentes lorsqu'il est placé dans un milieu homogène. Ces composantes peuvent devenir propagatives lorsque le fluorochrome est placé à proximité d'une interface. Elles se propagent alors dans des angles supérieurs à l'angle critique dans le milieu d'indice de réfraction le plus élevé.

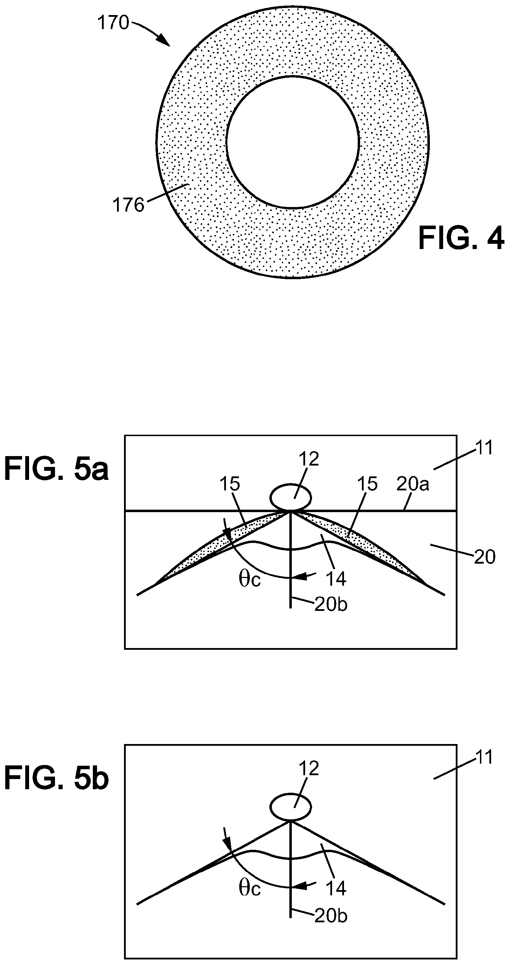

La figure 5a représente les composantes d'émission de fluorescence d'un émetteur 12 situé à l'interface entre un support 20 et un milieu liquide 11.

L'émission de fluorescence de l'émetteur 12 comprend une composante 14 émise pour θ compris entre 0 et θ_{c} et une composante 15 émise pour θ supérieur à θ_{c}, dite « lumière interdite » ou « lumière supercritique » et correspond aux composantes évanescentes dans le milieu liquide 11 devenues propagatives dans le support transparent 20.

Par exemple, pour une interface verre /eau, on constate que la lumière supercritique peut représenter jusqu'à environ un tiers en intensité de la lumière totale émise.

La valeur de l'angle critique est donnée par les lois de la réfraction de Snell-Descartes où θ_{c} = arcsin (n_{L}/nₛ). Dans le cas où le liquide est de l'eau (n_{L} = 1,33) et le support est en verre standard (nₛ = 1,52), θ_{c} vaut 61 °.

La figure 5b représente les composantes d'émission de fluorescence d'un émetteur 12 situé à une distance supérieure à environ 100 nm.

On constate que la lumière émise comprend la même composante 14, émise pour θ compris entre 0 et θ_{c} mais ne comprend plus de composante émise à un angle supérieur à θ_{c}, correspondant à de la lumière supercritique.

La méthode selon l'invention permet de récupérer l'information contenue dans la lumière supercritique et ainsi de produire des zones d'images utiles donnant des informations sur des structures et leur évolution éventuelle dans les 100 nm de profondeur par rapport à l'interface milieu liquide / support.

L'ouverture numérique, ON, d'un objectif est définie par ON = n.sin(αₘₐₓ) où n est l'indice du milieu de fonctionnement de l'objectif et αₘₐₓ est l'angle maximum de collection de l'objectif.

Des objectifs commerciaux actuels de grande ouverture numérique à immersion à huile (n=1,51) ont été développés. Ils possèdent des ON par exemple de 1,45 et de 1,49. Les angles maximums collectés sont supérieurs à l'angle critique θ_{c}. Ainsi, ces objectifs permettent de collecter la majeure partie de la lumière supercritique. De préférence, ces objectifs sont corrigés des aberrations chromatiques et sphériques et permettent ainsi d'obtenir une image plein champ d'excellente qualité.

Selon des modes de réalisations particuliers, l'invention peut mettre en oeuvre une ou plusieurs des caractéristiques suivantes :
- les composantes lumineuses du signal lumineux collecté faisant l'objet de ladite modulation sont issues des composantes lumineuses supercritiques de l'émission de lumière pour lesquelles l'angle θ est compris dans une gamme prédéterminée en fonction d'une gamme de profondeurs à explorer dans l'échantillon.
- les zones d'image obtenues à l'aide du dispositif d'observation et produisant par combinaison la zone d'image utile de l'échantillon sont obtenues successivement en appliquant successivement au signal lumineux collecté des filtres.
- la méthode peut comprendre les étapes suivantes :
   a) prise d'une pluralité de zones d'image d'une même région d'intérêt de l'échantillon à l'aide du dispositif d'observation et d'une pluralité de filtres, chaque filtre servant pour la prise d'une zone d'image de ladite pluralité de zones d'images, la pluralité de filtres étant telle que :
      + un filtre de ladite pluralité de filtres laisse passer dans le signal lumineux filtré des composantes lumineuses issues des composantes lumineuses supercritiques de l'émission de lumière ;
      + les filtres de ladite pluralité de filtres laissent tous passer des composantes lumineuses du signal lumineux collecté issues des composantes lumineuses critiques ou sous-critiques de l'émission de lumière et agissent de manière sensiblement identique entre eux sur les composantes lumineuses du signal lumineux collecté issues des composantes lumineuses critiques ou sous-critiques de l'émission de lumière ; et
      + il existe au moins deux filtres de ladite pluralité qui agissent de manière sensiblement différente entre eux sur l'amplitude ou la phase d'au moins une partie des composantes lumineuses du signal lumineux collecté issues des composantes lumineuses supercritiques de l'émission de lumière ; et
   b) production d'une zone d'image utile de l'échantillon par un calcul combinant la pluralité de zones d'image prises à l'étape a) pour mettre en évidence des différences entre les zones d'images de la pluralité de zones d'image de l'échantillon.
- la méthode peut comprendre les étapes suivantes :
   a) prise d'au moins deux zones d'image d'une même région d'intérêt de l'échantillon à l'aide du dispositif d'observation et de deux filtres, chaque filtre servant pour la prise d'une des deux zones d'image, les deux filtres étant tels que :
      - l'un des deux filtres laisse passer dans le signal lumineux filtré des composantes lumineuses issues des composantes lumineuses supercritiques de l'émission de lumière ; et
      - l'autre filtre agit de manière sensiblement identique audit un des deux filtres sur les composantes lumineuses du signal lumineux collecté issues des composantes lumineuses critiques ou sous-critiques de l'émission de lumière et il diminue de manière sensiblement plus forte que ledit un des deux filtres l'amplitude d'au moins une partie des composantes lumineuses du signal lumineux collecté issues des composantes lumineuses supercritiques de l'émission de lumière ; et
   b) production d'une zone d'image utile de l'échantillon par un calcul combinant les deux zones d'image de l'échantillon prises à l'étape a), le calcul comprenant une différence algébrique entre les deux zones d'image de l'échantillon.
- les filtres mis en oeuvre diminuent en outre partiellement l'amplitude de tout ou partie des composantes lumineuses du signal lumineux collecté issues des composantes lumineuses critiques et sous-critiques de l'émission de lumière.
- des composantes lumineuses du signal lumineux collecté issues de composantes lumineuses de l'émission de lumière formant le même angle θ sont traitées de manière sensiblement identique par un même filtre pour la diminution de l'amplitude ou la modification de la phase.
- l'échantillon présentant un phénomène à observer ayant un temps caractéristique donné, les zones d'images sont prises successivement à des intervalles de temps inférieurs ou égaux à la moitié du temps caractéristique.
- l'une des zones d'image de l'échantillon est obtenue à l'aide d'un filtre neutre laissant passer dans le signal lumineux filtré sans diminution d'amplitude toutes les composantes lumineuses du signal lumineux collecté issues des composantes lumineuses supercritiques de l'émission de lumière ; et une autre des zones d'image de l'échantillon est obtenue à l'aide d'un filtre total annulant dans le signal lumineux filtré toutes les composantes lumineuses issues des composantes lumineuses supercritiques de l'émission de lumière.
- le dispositif d'observation comprend un objectif plein champ à immersion et les filtres sont situés dans un plan focal arrière de l'objectif à immersion et/ou dans un plan conjugué dudit plan focal arrière.
- les filtres comprennent un diaphragme permettant, dans une position ouverte, de laisser passer des composantes lumineuses du signal lumineux collecté issues des composantes lumineuses supercritiques de l'émission de lumière et permettant, en fonction d'un degré de fermeture, d'occulter les composantes lumineuses du signal lumineux collecté issues des composantes lumineuses supercritiques de l'émission de lumière présentant un angle θ supérieur à une valeur limite liée audit degré de fermeture.
- l'échantillon à observer est de nature biologique.

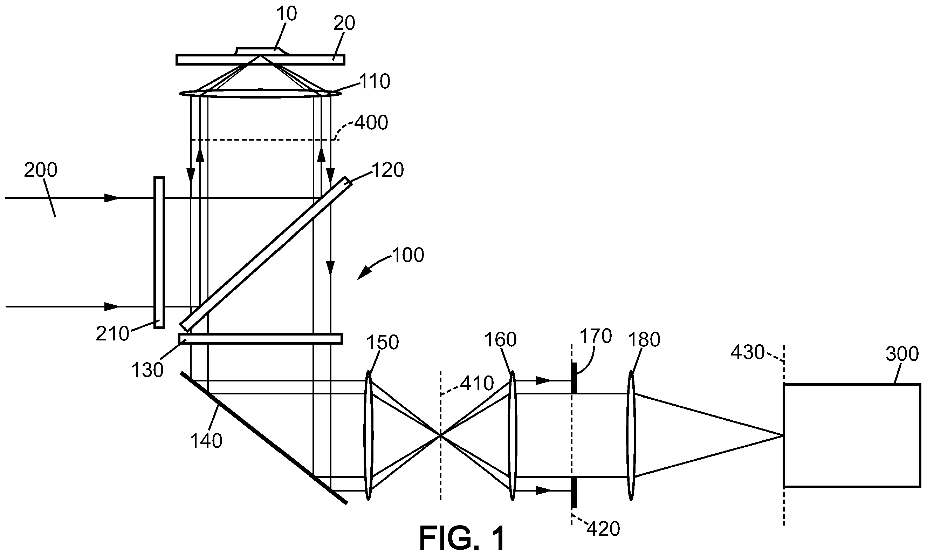

Selon un mode particulier, la modulation ne concerne pas toutes les composantes lumineuses du signal collecté issues des composantes lumineuses supercritiques de l'émission de lumière. Elle peut concerner seulement celles pour lesquelles l'angle θ est compris dans un ensemble prédéterminé, par exemple l'intervalle [θₐ ; θ_{b}], θₐ et θ_{b} étant tous les deux strictement supérieurs à θ_{c}. Ceci permet d'explorer la gamme de profondeurs correspondantes dans l'échantillon (voir explications données pour la figure 1).

Selon un autre mode de réalisation, la méthode comprend une étape a) de prise d'une pluralité de zones d'images correspondant à des signaux lumineux modulés. Pour obtenir la modulation, il est nécessaire qu'au moins l'un des filtres utilisés laisse passer des composantes lumineuses issues de la partie supercritique de l'émission de lumière. Il est également nécessaire que les autres filtres agissent différemment de ce filtre sur tout ou partie des composantes supercritiques du signal lumineux collecté. « Différemment » peut signifier que les filtres en question atténuent plus, ou moins, l'amplitude des composantes lumineuses concernées. La différence peut aussi porter sur la phase. Les actions sur l'amplitude et la phase peuvent être combinées.

En revanche, les filtres doivent agir de manière sensiblement identique sur les composantes lumineuses issues de la partie critique ou sous-critique de l'émission de lumière. Les composantes lumineuses issues de la partie critique ou sous-critique de l'émission de lumière peuvent être modifiées par les filtres utilisés pour obtenir les zones d'image, mais cette modification doit être sensiblement la même pour toutes les zones d'image combinées pour obtenir la zone d'image utile. Par « sensiblement la même », on entend que selon un mode particulier il n'y a pas de différence, mais que, selon un autre mode, il peut y avoir des différences minimes par rapport la modulation recherchée (celle portant sur les composantes lumineuses issues des composantes lumineuses supercritiques de l'émission de lumière). De préférence, on laisse subsister dans le signal lumineux filtré des composantes lumineuses issues des composantes lumineuses critiques ou sous-critiques de l'émission de lumière.

La méthode comprend une étape b) où des zones d'image prises à l'étape a) sont combinées. Les combinaisons se font par un calcul portant sur l'intensité lumineuse. Ce calcul est fonction des filtres utilisés et sert à mettre en évidence les différences entre les zones d'image induites par la modulation.

L'avantage de prendre une pluralité de zones d'image est de permettre de réduire un bruit de fond éventuel, par exemple en introduisant des moyennes dans le calcul.

Par exemple, on peut prendre trois zones d'image successives d'une même région d'intérêt de l'échantillon. La première est une zone d'image de l'échantillon contenant l'information liée à toutes les composantes lumineuses issues de la partie supercritique du signal collecté, c'est-à-dire que le filtre utilisé n'a pas modifié sensiblement ces composantes. La deuxième est une zone d'image ne contenant aucune information liée aux composantes lumineuses issues de la partie supercritique du signal collecté, c'est-à-dire que le filtre utilisé a occulté ces composantes. La troisième zone d'image est prise dans des conditions identiques à la première. Une combinaison possible de ces trois zones d'image successives est de calculer la valeur absolue de la différence entre, d'une part, une moyenne des première et troisième zones d'image et, d'autre part, la seconde zone d'image. Ceci peut permettre de réduire le bruit dans la zone d'image utile (phénomène de photoblanchiment, fluctuation de l'intensité d'excitation, mouvement de l'échantillon).

Les images contiennent une information liée à l'intensité (positive) du champ électrique global. Une différence entre deux pixels peut donc être positive ou négative, c'est pourquoi on utilise une valeur absolue pour obtenir un résultat positif qui représente une intensité, celle de la zone d'image utile.

Selon un autre mode particulier, on prend à l'étape a) deux zones d'image d'une même région d'intérêt de l'échantillon. La première est prise en utilisant un filtre laissant passer des composantes lumineuses issues de la partie supercritique de l'émission de lumière. La seconde est prise avec un filtre agissant différemment du premier filtre sur tout ou partie des composantes supercritiques du signal collecté, et sensiblement identiquement sur les composantes critiques ou sous-critiques su signal collecté. A l'étape b), on combine les deux zones d'image en calculant pour chaque pixel la valeur absolue de la différence entre les première et la seconde zones d'image. Ce résultat représente une intensité, celle de la zone d'image utile. L'avantage de ce mode de réalisation réside dans la simplicité de la combinaison des zones d'image, c'est-à-dire la simplicité et la rapidité des calculs.

Selon un mode particulier, on peut atténuer sur les deux zones d'image de façon identique partiellement tout ou partie des composantes lumineuses du signal lumineux collecté issues des composantes lumineuses critiques ou sous-critiques de l'émission de lumière. Ceci est important quand la lumière provenant des rayons sous-critique est très grande devant celle issue des rayons supercritique.

En général, les filtres utilisés respectent la symétrie de révolution et traitent de la même façon les composantes lumineuses du signal lumineux collecté issues de composantes lumineuses de l'émission de lumière formant le même angle θ. En effet, une modulation sur l'azimut des composantes de la lumière émise ne présente pas beaucoup d'intérêt. Au contraire, le fait de ne pas moduler sur l'azimut permet de ne pas introduire d'astigmatisme dans la zone d'image utile.

Si l'échantillon évolue dans le temps (par exemple une membrane cellulaire) avec un temps caractéristique donné, on prend des zones d'image successives (plutôt représentatives de l'échantillon en profondeur) avec une période inférieure à la moitié du temps caractéristique (cadence vidéo) de manière à pouvoir suivre ces évolutions. La méthode permet normalement d'obtenir les zones d'images utiles (plutôt représentatives de l'interface de l'échantillon) à la même cadence que celle des zones d'image successives, i. e. à la cadence vidéo et non pas à la moitié de la cadence vidéo comme dans la méthode décrite par le document FR-A-2943428.

L'adjonction d'un diaphragme dans le plan focal arrière de l'objectif et/ou dans un plan conjugué peut se faire de manière simple et notamment être mise en oeuvre avec des microscopes commerciaux. Il en résulte un dispositif dont le coût de l'amélioration est très modeste.

La fonction du diaphragme consiste à occulter les composantes lumineuse du signal lumineux collecté issues des composantes lumineuses de l'émission de lumière de l'échantillon dans les directions angulaires θ supérieures ou égales un certain angle dépendant de l'ouverture du diaphragme. Les figures 5a et 5b rappellent les principes d'émission de fluorescence. Un avantage de la méthode est que l'information sous-critique est toujours disponible dans les zones d'image utilisées pour la combinaison. Cette information est souvent intéressante, car elle est reliée aux régions plus internes de l'échantillon.

D'autres particularités et avantages de la présente invention apparaîtront dans la description ci-après d'exemples de réalisation non limitatifs, en référence aux dessins annexés, dans lesquels :
- la figure 1 illustre une vue schématique d'un dispositif de microscopie permettant de mettre en oeuvre une méthode selon l'invention ;
- la figure 2 illustre une variante selon l'invention du dispositif selon la figure 1, adapté à la microscopie confocale ;
- la figure 3 illustre une variante selon l'invention du dispositif selon la figure 1, adapté à la microscopie TIRF ;
- la figure 4 illustre un exemple de filtre pour la mise en oeuvre d'une méthode selon l'invention ;
- les figures 5a et b illustrent les composantes d'émission de fluorescence selon différentes configurations et ont été commentées ci-dessus ;
- la figure 6a et 6b illustrent des zones d'image d'une même cellule respectivement avec, puis sans les composantes lumineuses du signal lumineux collecté issues des composantes lumineuses critiques ou sous-critiques de l'émission de lumière ;
- la figure 6c représente une zone d'image utile de la même cellule obtenue par combinaison des zones d'image des figures 6a et 6b ;
- la figure 7 est une représentation graphique de l'intensité lumineuse des taches obtenues à partir d'un même échantillon test, d'une part par la méthode décrite dans le document FR-A-2943428 (occultation des composantes critiques ou sous-critiques) et d'autre part par une méthode selon l'invention (modulation portant sur les composantes supercritiques, puis démodulation).

Pour des raisons de clarté, les dimensions des différents éléments représentés sur ces figures ne sont pas nécessairement en proportion avec leurs dimensions réelles. Sur les figures, des références identiques correspondent à des éléments identiques.

La figure 1 présente une vue schématique d'un dispositif de microscopie de fluorescence 100. Celui-ci comprend un objectif à immersion 110 dont l'ON est supérieur ou égal à 1.33. Un support en verre 20 est disposé au-dessus de cet objectif à immersion 110. De l'huile est disposée entre l'objectif à immersion 110 et le support en verre 20.

Un échantillon 10 à observer est disposé sur le support en verre 20. Cet échantillon 10 comprend par exemple des composants fluorescents dispersés dans de l'eau.

Le plan focal arrière de l'objectif est référencé 400. De la lumière d'excitation est produite par un faisceau 200 issu d'une source lumineuse qui traverse un filtre d'excitation 210 et est réfléchie par un miroir dichroïque 120 pour aller illuminer l'échantillon 10 après avoir traversé le support transparent 20. Un exemple de trajet de la lumière d'excitation incidente est figuré par les flèches dirigées vers le haut de la figure. La lumière d'excitation incidente peut être en partie réfléchie et est alors filtrée par un filtre d'émission 130 de manière à ce que l'image formée dans un plan image ne comprenne que de la lumière de fluorescence émise par l'échantillon 10.

La lumière de fluorescence émise par l'échantillon 10 traverse le support transparent 20, le miroir dichroïque 120, le filtre d'émission 130.

Selon le mode de réalisation représenté en figure 1, cette lumière est réfléchie sur un miroir 140 et la suite du dispositif fonctionne avec la lumière réfléchie.

Une lentille 150, dite lentille de tube, permet de focaliser la lumière sur un plan image intermédiaire 410.

La lumière est ensuite parallélisée grâce à une lentille 160 et focalisée ensuite par une lentille 180 sur le plan image 430 où l'image est acquise par un dispositif adapté, notamment une caméra 300. Les plans 430 et 410 sont des plans images conjugués du plan d'observation.

Les lentilles 160 et 180 sont disposées de manière à ce qu'un plan conjugué 420 du plan focal arrière de l'objectif à immersion 110 soit situé entre ces lentilles 160 et 180.

Un diaphragme 170 d'ouverture variable est disposé dans ce plan focal arrière de l'objectif à immersion. Ce diaphragme agit comme un filtre pour les composantes lumineuses du signal lumineux collecté. Il peut être en position ouverte et laisser passer toutes les composantes lumineuses du signal lumineux collecté issues des composantes lumineuses de l'émission de lumière. Il peut être en position partiellement fermée et occulter une partie des composantes lumineuses du signal lumineux collecté.

Plus précisément, les rayons lumineux émis suivants un certain angle par les émetteurs fluorescents de l'échantillon 10 situés dans le plan d'observation interceptent le plan focal arrière 400 de l'objectif (ou tout plan conjugué 420 de ce plan 400) à une certaine distance r(θ) du centre (défini par l'axe optique) de ce plan. r(θ) est une fonction croissante de θ. Pour des objectifs aplanétiques, par exemple, r(θ) est sensiblement proportionnelle à sin(θ). Ainsi, l'ensemble des rayons émis suivant l'angle θ (formant un cône) décrit un cercle de rayon r(θ) dans le plan focal arrière.

Quand le diaphragme 170 est disposé dans le plan focal arrière 400 de l'objectif 110, la relation entre r(θ) et sin(θ) est :
r(θ)= ni × fₒ × sin(θ), où fₒ est la distance focale de l'objectif à immersion 110 (en général de l'ordre de quelques millimètres) et ni est l'indice du milieu d'immersion utilisé pour l'objectif (en général de l'huile).

Selon un exemple de réalisation, on a un objectif à immersion de grossissement G = 100 et la distance focale de la lentille de tube 150 vaut fₜ = 200 mm.

On a alors fₒ = ft/G = 2 mm. On obtient dans cette configuration : r(θc)= 2,66 mm.

Si le diaphragme 170 est disposé dans le plan conjugué du plan focal arrière, il convient de tenir compte du facteur de grandissement lié au système optique. A titre d'exemple, dans le plan 420, il convient d'introduire un facteur multiplicatif G' = f160/f150, où f150 est la distance focale de la lentille de tube 150 et f160 est la distance focale de la lentille 160.

Les composantes lumineuses du signal lumineux collecté issues des composantes lumineuses critiques ou sous-critiques de l'émission de lumière interceptent le plan focal arrière suivant un disque fermé centré de rayon r(èc). Les composantes lumineuses du signal lumineux collecté issues des composantes lumineuses supercritiques de l'émission de lumière, pour lesquelles θ_{c} < θ < θₘₐₓ, forment un anneau ouvert dans le plan focal arrière r(θ_{c}) < r(θ) < r(θₘₐₓ). La mise en place d'un diaphragme 170 centré sur l'axe optique et d'ouverture r(θ_{c}) permet donc d'occulter toutes les composantes lumineuses supercritiques.

La sélection se fait ainsi à l'émission. Il en résulte que le système d'éclairage n'a pas besoin d'être changé par rapport à celui d'un dispositif d'observation d'épifluorescence standard. On peut ainsi éclairer avec une source de lumière non-cohérente, par exemple une lumière blanche standard, notamment obtenue avec une lampe au mercure. Il en résulte plusieurs avantages, comme l'absence de surcoût significatif (à comparer à la technique de microscopie TIRFM, où un éclairage par laser est requis) ainsi que la possibilité d'obtenir un champ homogène (autorisant éventuellement des mesures quantitatives).

Selon un mode de réalisation, des moyens d'actionnement du diaphragme fonctionnent à la cadence vidéo (typiquement de l'ordre de quelques dizaines de Hertz) afin de passer de la position ouverte à la position fermée en alternance à la vitesse d'acquisition des images. Il est ainsi possible d'avoir l'information de volume et celle de surface simultanément.

Cette méthode d'imagerie est particulièrement adapté à l'imagerie d'échantillon de nature biologique, en particulier pour l'étude de processus biologiques dans les cellules vivantes, tels que phénomènes d'adhésion cellulaire, d'endocytoses / exocytoses,....

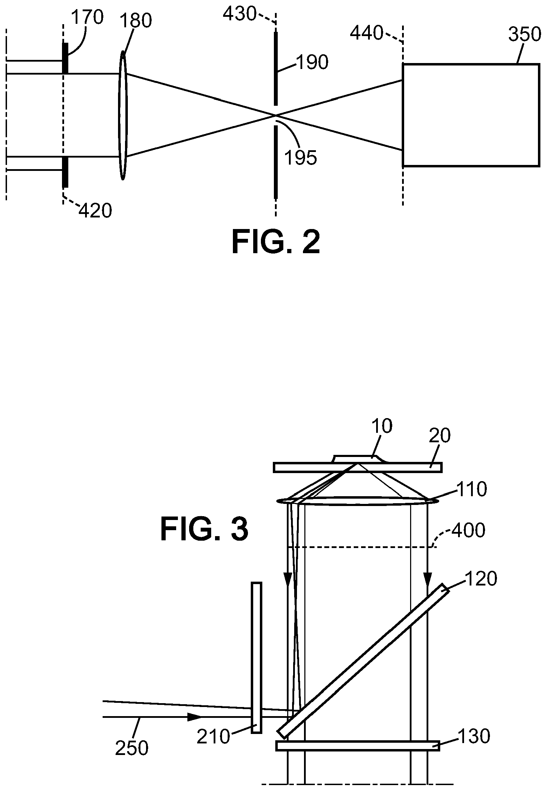

La figure 2 présente une vue schématique d'une variante, selon l'invention, du dispositif de la figure 1 où les composants présents avant le plan image 430 sont identiques dans les deux modes de réalisation. Dans le dispositif de la figure 2, un cache de type sténopé 190 comprenant un trou 195 est disposé dans le plan image. Un monodétecteur 350 permet une acquisition point par point de la lumière passant à travers le trou 195. Il est ainsi possible d'obtenir une configuration permettant d'effectuer de la microscopie confocale.

La figure 3 présente une vue schématique d'une variante, selon l'invention, du dispositif de la figure 1 où les composants du dispositif de microscopie sont similaires, mais où la source de lumière diffère.

Dans le dispositif de la figure 3, la lumière 250 provient d'un laser et l'éclairage de l'échantillon est produit par réflexion totale interne. Il est ainsi possible d'obtenir un dispositif de type TIRF amélioré.

On remarque que le plan focal arrière des objectifs commerciaux est situé en général à l'intérieur de l'objectif et donc difficilement accessible. Il est donc souvent recommandé de réaliser un système permettant d'imager ce plan focal arrière pour pouvoir insérer le système de filtre 170 entre le détecteur et l'objectif.

Selon un exemple de réalisation, on utilise un microscope inversé de fluorescence de type Ti de Nikon comprenant un module (réf. TI-T-BPH, MEB55810) qui permet d'imager le plan focal arrière et de positionner un masque annulaire pour permettre le contraste de phase (externe) avec les objectifs de grandes ouverture numérique. Il est possible de mettre un diaphragme 170 du dispositif selon l'invention dans ce type de module. Le système de centrage et du réglage de la position du plan sont tout à fait adaptés pour un diaphragme filtrant les angles supercritiques. Le système comprend plusieurs positions pour les différents objectifs.

La figure 4 présente une vue schématique d'un diaphragme 170 destiné à être disposé sur le plan focal arrière 400 de l'objectif à immersion 110 ou dans un plan conjugué 420 dudit plan focal. Le diaphragme 170 est composé d'une zone périphérique 176 apte à occulter la lumière. Soit cette zone 176 est effectivement mobile (comme dans un appareil photographique), soit le diaphragme est remplacé par un autre, par exemple en faisant tourner une roue à filtre rotative motorisée.

Le diaphragme 170 peut être un diaphragme à iris, tel que celui commercialisé par Thorlabs. Son ouverture est modifiée par le déplacement de pièces mécaniques mobiles (non-représentées).

Une autre possibilité est d'utiliser d'une roue comportant des ouvertures ou des matériaux semi-transparents répartis sur des secteurs de la roue et de la faire tourner. Dans ce cas, le diaphragme peut, par exemple, être réalisé par un trou circulaire du diamètre adéquat dans un matériau opaque. Ceci permet d'obtenir des cycles transmission / obturation très courts, susceptibles par exemple de suivre le rythme d'acquisition des images avec une caméra.

Selon un exemple de réalisation, on utilise un microscope de fluorescence inversé Nikon type «Ti-U»® avec une base de tube binoculaire de phase «TI-T-BPH»®, un objectif à immersion à huile x100 d'ouverture numérique 1,49. On utilise un cube de filtres de fluorescence contenant un filtre d'émission, une lame dichroïque et un filtre d'excitation. La source lumineuse utilisée est une source fibrée de référence commerciale «Nikon Intensilight»® avec une lampe Hg de 130 W et un générateur «C-HGFI»®. La caméra utilisée est une Caméra EMCCD Andor Ixon+, refroidie à sensiblement -75°. Le diaphragme 170 utilisé est le diaphragme à iris réalisé par Thorlabs.

Le diaphragme est ensuite positionné dans le module Nikon MEB55810 («TI-T-BPH») à la place de l'anneau de phase. La position du diaphragme est réglée à l'aide de la lentille de Bertrand du microscope et des déplacements du module grâce à des vis de centrage et de position axiale. La procédure suivie est identique à celle du réglage de l'anneau de phase fourni par le constructeur avec ce module.

Des observations ont été effectuées sur des cellules d'embryon de rein humain marquées à la Cholératoxine (qui se lie à des glycolipides sur la membrane et les constituants des radeaux lipidiques) couplée à Alexa 488 et excitées par la lampe Nikon Intensilight Hg 130 W (lampe classique). Le cube de filtres utilisé est composé d'un filtre d'excitation à bande passante de 450 à 490 nm, d'un miroir dichroïque à 500 nm et d'un filtre d'émission à bande passante de 510 à 550 nm.

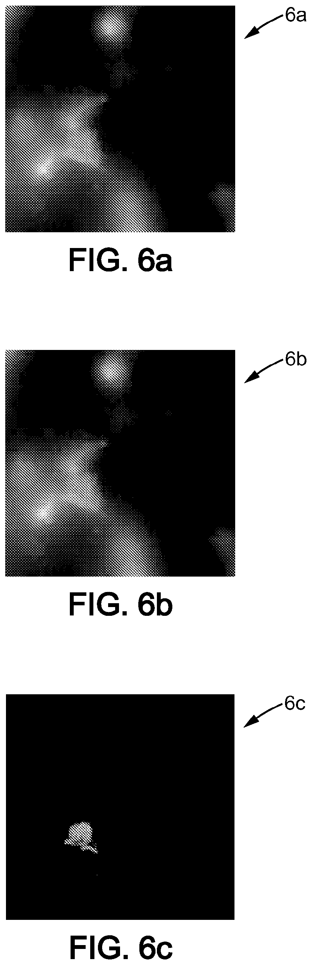

Les figures 6a et 6b montrent deux images obtenues avec diaphragme ouvert (6a), et avec diaphragme fermé de manière à occulter toutes les composantes lumineuses supercritiques (6b). Le temps de pause (T=300 ms) et le gain (G=0) sont identiques pour les images 6a et 6b. L'image 6c est obtenue comme la valeur absolue de la différence entre les images 6a et 6b (c'est-à-dire entre l'intensité des signaux associés à ces images).

On constate que les deux images 6a et 6b paraissent identiques. En revanche l'image 6c est bien contrastée. On y observe avantageusement des variations d'intensité que l'on associe à des phénomènes membranaires difficiles à distinguer sur les deux autres images, car noyés parmi les autres informations provenant de l'intérieur de la cellule.

On note que ces observations ont été avantageusement réalisées avec une lampe « classique » et qu'il n'a pas été nécessaire de mettre en oeuvre un laser pour les obtenir.

Des mesures de la résolution latérale ont été effectuées avec des billes fluorescentes Fluosphere® (commercialisées par Invitrogen) excitation/émission : 580/605 nm déposées à la tournette (« spin-coating ») sur une contre-lamelle de verre standard (épaisseur 0.13-0.16 mm), puis immergées dans de l'eau distillée.

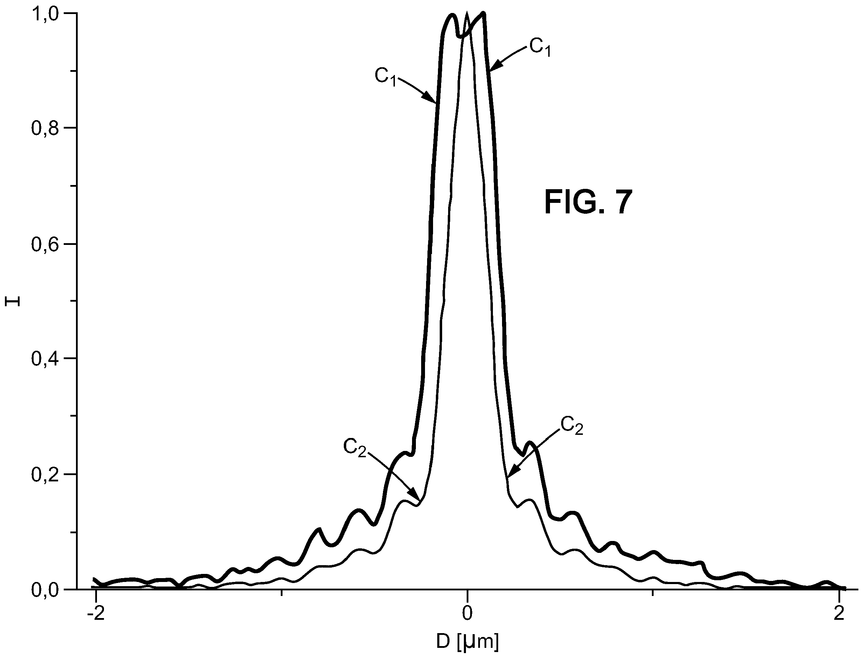

La figure 7 illustre le profil d'intensité de fluorescence de ces billes (intensité de signal normalisée en ordonnée en fonction du déplacement latéral en abscisse, exprimé en µm). On constate que le profil C2, qui correspond à la zone d'image utile obtenue par la méthode selon l'invention, est plus étroit que le profil C1, qui correspond à l'image obtenue par la méthode décrite dans document FR-A-2943428. L'amélioration correspondante de la résolution est de 20-25%.

L'invention ne se limite pas à ces types de réalisation et doit être interprétée de façon non limitative, et englobant tous les modes de réalisation équivalents.

## Revendications

1. Méthode pour observer une émission de lumière (14, 15) d'un échantillon (10) dans un milieu (11) d'indice de réfraction n_{L}, l'échantillon étant disposé contre une surface (20a) d'un support transparent (20) d'indice de réfraction nₛ supérieur à n_{L}, l'émission de lumière comprenant des composantes lumineuses d'amplitude et de phase données, orientées vers le support et formant un angle θ avec une direction (20b) perpendiculaire à la surface (20a), parmi lesquelles, d'une part, des composantes lumineuses supercritiques pour lesquelles l'angle θ est strictement supérieur à un angle critique θ_{c} = arcsin (n_{L}/nₛ) et, d'autre part, des composantes lumineuses critiques ou sous-critiques, pour lesquelles l'angle θ est inférieur ou égal à l'angle critique θ_{c}, la méthode mettant en oeuvre un dispositif d'observation (100) capable de :
- collecter au moins une partie de l'émission de lumière d'une région d'intérêt de l'échantillon et obtenir un signal lumineux collecté comportant des composantes lumineuses issues des composantes lumineuses supercritiques de l'émission de lumière ;
- d'appliquer des filtres (170) au signal lumineux collecté pour sélectivement diminuer l'amplitude et/ou modifier la phase de certaines composantes lumineuses du signal lumineux collecté pour obtenir un signal lumineux filtré ; et
- de transformer le signal lumineux filtré en une zone d'image de la région d'intérêt de l'échantillon;
la méthode étant **caractérisée en ce que** :
- on réalise une modulation du signal lumineux filtré, dans lequel on laisse passer des composantes lumineuses issues des composantes lumineuses critiques ou sous-critiques de l'émission de lumière, pour obtenir des zones d'image (6a, 6b) d'une même région d'intérêt de l'échantillon, la modulation portant sur tout ou partie des composantes lumineuses du signal lumineux collecté issues des composantes lumineuses supercritiques de l'émission de lumière ; et
- on produit au moins une zone d'image utile (6c) de l'échantillon par combinaison des zones d'image (6a, 6b), la combinaison mettant en évidence des différences entre les zones d'image (6a, 6b) liées à la modulation.

2. Méthode selon la revendication 1, **caractérisée en ce que** les composantes lumineuses du signal lumineux collecté faisant l'objet de ladite modulation sont issues des composantes lumineuses supercritiques de l'émission de lumière pour lesquelles l'angle θ est compris dans une gamme prédéterminée en fonction d'une gamme de profondeurs à explorer dans l'échantillon.

3. Méthode selon l'une quelconque des revendications 1 ou 2, **caractérisée en ce que** les zones d'image (6a, 6b) obtenues à l'aide du dispositif d'observation (100) et produisant par combinaison la zone d'image utile (6c) de l'échantillon sont obtenues successivement en appliquant successivement au signal lumineux collecté des filtres (170).

4. Méthode l'une quelconque des revendications 1 à 3, **caractérisée en ce qu'**elle comprend les étapes suivantes :
a) prise d'une pluralité de zones d'image d'une même région d'intérêt de l'échantillon à l'aide du dispositif d'observation (100) et d'une pluralité de filtres (170), chaque filtre servant pour la prise d'une zone d'image de ladite pluralité de zones d'images, la pluralité de filtres étant telle que :
- un filtre de ladite pluralité de filtres laisse passer dans le signal lumineux filtré des composantes lumineuses issues des composantes lumineuses supercritiques de l'émission de lumière ;
- les filtres de ladite pluralité de filtres laissent tous passer des composantes lumineuses du signal lumineux collecté issues des composantes lumineuses critiques ou sous-critiques de l'émission de lumière et agissent de manière sensiblement identique entre eux sur les composantes lumineuses du signal lumineux collecté issues des composantes lumineuses critiques ou sous-critiques de l'émission de lumière ; et
- il existe au moins deux filtres de ladite pluralité qui agissent de manière sensiblement différente entre eux sur l'amplitude ou la phase d'au moins une partie des composantes lumineuses du signal lumineux collecté issues des composantes lumineuses supercritiques de l'émission de lumière ; et
b) production d'une zone d'image utile de l'échantillon par un calcul combinant la pluralité de zones d'image prises à l'étape a) pour mettre en évidence des différences entre les zones d'images de la pluralité de zones d'image de l'échantillon.

5. Méthode selon l'une quelconque des revendications 1 à 4, **caractérisée en ce qu'**elle comprend les étapes suivantes :
a) prise d'au moins deux zones d'image d'une même région d'intérêt de l'échantillon à l'aide du dispositif d'observation et de deux filtres, chaque filtre servant pour la prise d'une des deux zones d'image, les deux filtres étant tels que :
- l'un des deux filtres laisse passer dans le signal lumineux filtré des composantes lumineuses issues des composantes lumineuses supercritiques de l'émission de lumière ; et
- l'autre filtre agit de manière sensiblement identique audit un des deux filtres sur les composantes lumineuses du signal lumineux collecté issues des composantes lumineuses critiques ou sous-critiques de l'émission de lumière et il diminue de manière sensiblement plus forte que ledit un des deux filtres l'amplitude d'au moins une partie des composantes lumineuses du signal lumineux collecté issues des composantes lumineuses supercritiques de l'émission de lumière ; et
b) production d'une zone d'image utile de l'échantillon par un calcul combinant les deux zones d'image de l'échantillon prises à l'étape a), le calcul comprenant une différence algébrique entre les deux zones d'image de l'échantillon.

6. Méthode selon l'une quelconque des revendications 1 à 5, **caractérisée en ce que** les filtres mis en oeuvre diminuent en outre partiellement l'amplitude de tout ou partie des composantes lumineuses du signal lumineux collecté issues des composantes lumineuses critiques et sous-critiques de l'émission de lumière.

7. Méthode selon l'une quelconque des revendications 1 à 6, **caractérisée en ce que** des composantes lumineuses du signal lumineux collecté issues de composantes lumineuses de l'émission de lumière formant le même angle θ sont traitées de manière sensiblement identique par un même filtre pour la diminution de l'amplitude ou la modification de la phase.

8. Méthode selon l'une quelconque des revendications 1 à 7, **caractérisée en ce que**, l'échantillon présentant un phénomène à observer ayant un temps caractéristique donné, les zones d'images sont prises successivement à des intervalles de temps inférieurs ou égaux à la moitié du temps caractéristique.

9. Méthode selon l'une quelconque des revendications 1 à 8, **caractérisée en ce que** :
- l'une des zones d'image de l'échantillon est obtenue à l'aide d'un filtre neutre laissant passer dans le signal lumineux filtré sans diminution d'amplitude toutes les composantes lumineuses du signal lumineux collecté issues des composantes lumineuses supercritiques de l'émission de lumière ; et
- une autre des zones d'image de l'échantillon est obtenue à l'aide d'un filtre total annulant dans le signal lumineux filtré toutes les composantes lumineuses issues des composantes lumineuses supercritiques de l'émission de lumière.

10. Méthode selon l'une quelconque des revendications 1 à 9, **caractérisée en ce que** le dispositif d'observation (100) comprend un objectif plein champ à immersion (110) et les filtres (170) sont situés dans un plan focal arrière (400) de l'objectif à immersion (110) et/ou dans un plan conjugué (420) dudit plan focal arrière.

11. Méthode selon la revendication 10, **caractérisée en ce que** les filtres (170) comprennent un diaphragme (176) permettant, dans une position ouverte, de laisser passer des composantes lumineuses du signal lumineux collecté issues des composantes lumineuses supercritiques de l'émission de lumière et permettant, en fonction d'un degré de fermeture du diaphragme (176), d'occulter les composantes lumineuses du signal lumineux collecté issues des composantes lumineuses supercritiques de l'émission de lumière présentant un angle θ supérieur à une valeur limite liée audit degré de fermeture.

12. Méthode selon l'une quelconque des revendications 1 à 11, **caractérisée en ce que** l'échantillon à observer est de nature biologique.

## Patentansprüche

1. Verfahren zur Beobachtung einer Lichtemission (14, 15) einer Probe (10) in einem Medium (11) mit Brechungsindex n_{L}, wobei die Probe gegen eine Fläche (20a) eines transparenten Trägers (20) mit Brechungsindex nₛ größer als n_{L} angeordnet ist und die Lichtemission Lichtkomponenten mit gegebener Amplitude und Phase umfasst, die zum Träger ausgerichtet sind und einen Winkel θ mit einer Richtung (20b) senkrecht zur Oberfläche (20a) bilden, darunter einerseits überkritische Lichtkomponenten, für die der Winkel θ streng größer als ein kritischer Winkel θ_{c} = arcsin (n_{L}/nₛ) ist, und andererseits kritische oder unterkritische Lichtkomponenten, für die der Winkel θ kleiner oder gleich dem kritischen Winkel θ_{c} ist, wobei das Verfahren eine Betrachtungsvorrichtung (100) umsetzt, die zu Folgendem geeignet ist:
- Erfassen mindestens eines Teils der Lichtemission eines Bereichs von Interesse der Probe und Erhalten eines erfassten Lichtsignals, das von überkritischen Lichtkomponenten der Lichtemission stammenden Lichtkomponenten umfasst;
- Anwenden von Filtern (170) auf das erfasste Lichtsignal, um selektiv die Amplitude zu verkleinern und/oder die Phase bestimmter Lichtkomponenten des erfassten Lichtsignals zu verändern, um ein gefiltertes Lichtsignal zu erhalten; und
- Umwandeln des gefilterten Lichtsignals in einen Bildbereich des Bereichs von Interesse der Probe;
wobei das Verfahren **dadurch gekennzeichnet ist, dass**:
- eine Modulation des gefilterten Lichtsignals durchgeführt wird, in dem die von kritischen oder unterkritischen Lichtkomponenten der Lichtemission stammenden Lichtkomponenten durchgelassen werden, um Bildbereiche (6a, 6b) desselben Bereichs von Interesse der Probe zu erhalten, wobei die Modulation alle oder einen Teil der von überkritischen Lichtkomponenten der Lichtemission stammenden Lichtkomponenten des erfassten Lichtsignals betrifft; und
- durch Kombination der Bildbereiche (6a, 6b) mindestens ein nutzbarer Bildbereich (6c) der Probe erzeugt wird, wobei die Kombination die Unterschiede zwischen den Bildbereichen (6a, 6b) im Zusammenhang mit der Modulation verdeutlicht.

2. Verfahren nach Anspruch 1, **dadurch gekennzeichnet, dass** die der Modulation unterliegenden Lichtkomponenten des erfassten Lichtsignals von überkritischen Lichtkomponenten der Lichtemission stammen, für die der Winkel θ in einem vorgegebenen Bereich in Abhängigkeit eines Bereichs von in der Probe zu untersuchenden Tiefen liegt.

3. Verfahren nach einem der Ansprüche 1 oder 2, **dadurch gekennzeichnet, dass** die Bildbereiche (6a, 6b), die mittels der Betrachtungsvorrichtung (100) erhalten werden und durch Kombination den nutzbaren Bildbereich (6c) erzeugen, nacheinander erhalten werden, indem nacheinander Filter (170) auf das erfasste Lichtsignal angewendet werden.

4. Verfahren nach einem der Ansprüche 1 bis 3, **dadurch gekennzeichnet, dass** es die folgenden Schritte umfasst:
a) Aufnehmen einer Vielzahl von Bildbereichen eines selben Bereichs von Interesse der Probe mithilfe der Betrachtungsvorrichtung (100) und einer Vielzahl von Filtern (170), wobei jeder Filter zum Aufnehmen eines Bildbereichs der Vielzahl von Bildbereichen dient, wobei die Vielfalt der Filter so beschaffen ist, dass:
- ein Filter der Vielzahl von Filter Lichtkomponenten im gefilterten Lichtsignal durchtreten lässt, die von überkritischen Lichtkomponenten der Lichtemission stammen;
- die Filter der Vielzahl von Filter alle die von kritischen oder unterkritischen Lichtkomponenten der Lichtemission stammenden Lichtkomponenten des erfassten Lichtsignals durchtreten lassen und untereinander im Wesentlichen identisch auf die von kritischen oder unterkritischen Lichtkomponenten der Lichtemission stammenden Lichtkomponenten des erfassten Lichtsignals wirken; und
- es mindestens zwei Filter dieser Vielfalt gibt, die untereinander im Wesentlichen unterschiedlich auf die Amplitude oder die Phase mindestens eines Teils der von überkritischen Lichtkomponenten der Lichtemission stammenden Lichtkomponenten des erfassten Lichtsignals wirken; und
b) Herstellung eines nutzbaren Bildbereichs der Probe durch eine Berechnung, die die Vielzahl der in Schritt a) aufgenommenen Bildbereiche kombiniert, um Unterschiede zwischen den Bildbereichen der Vielzahl der Bildbereiche der Probe zu verdeutlichen.

5. Verfahren nach einem der Ansprüche 1 bis 4, **dadurch gekennzeichnet, dass** es die folgenden Schritte umfasst:
a) Aufnehmen von mindestens zwei Bildbereichen eines selben Bereichs von Interesse der Probe mithilfe der Betrachtungsvorrichtung und zwei Filtern, wobei jedes Filter zum Aufnehmen eines der zwei Bildbereiche dient, wobei die zwei Filter so beschaffen sind, dass:
- eines der zwei Filter im gefilterten Lichtsignal Lichtkomponenten durchtreten lässt, die von überkritischen Lichtkomponenten der Lichtemission stammen; und
- das andere Filter im Wesentlichen identisch wie eines der zwei Filter auf die von kritischen oder unterkritischen Lichtkomponenten der Lichtemission stammenden Lichtkomponenten des erfassten Lichtsignals wirkt und es im Wesentlichen stärker als eines der zwei Filter die Amplitude mindestens eines Teils der von überkritischen Lichtkomponenten der Lichtemission stammenden Lichtkomponenten des erfassten Lichtsignals verringert; und
b) Herstellung eines nutzbaren Bildbereichs der Probe durch eine Berechnung, die die zwei in Schritt a) aufgenommenen Bildbereiche kombiniert, wobei die Berechnung eine algebraische Differenz zwischen den beiden Bildbereichen der Probe umfasst.

6. Verfahren nach einem der Ansprüche 1 bis 5, **dadurch gekennzeichnet, dass** die eingesetzten Filter auch teilweise die Amplitude aller oder eines Teils der von kritischen und unterkritischen Lichtkomponenten der Lichtemission stammenden Lichtkomponenten des erfassten Lichtsignals verringern.

7. Verfahren nach einem der Ansprüche 1 bis 6, **dadurch gekennzeichnet, dass** die von Lichtkomponenten der Lichtemission stammenden Lichtkomponenten des erfassten Lichtsignals, die denselben Winkel θ bilden, im Wesentlichen identisch von einem selben Filter zur Verringerung der Amplitude oder der Änderung der Phase behandelt werden.

8. Verfahren nach einem der Ansprüche 1 bis 7, **dadurch gekennzeichnet, dass** die Probe, die eine zu betrachtende Erscheinung mit einer gegebenen charakteristischen Zeit darstellt, und die Bildbereiche nacheinander zu Zeitintervallen kleiner oder gleich der Hälfte der charakteristischen Zeit aufgenommen werden.

9. Verfahren nach einem der Ansprüche 1 bis 8, **dadurch gekennzeichnet, dass**:
- einer der Bildbereiche der Probe mittels eines neutralen Filters erhalten wird, das im gefilterten Lichtsignal ohne Verringerung der Amplitude alle von überkritischen Lichtkomponenten der Lichtemission stammenden Lichtkomponenten des erfassten Lichtsignals durchtreten lässt; und
- ein anderer Bildbereich der Probe mittels eines Filters erhalten wird, das im gefilterten Lichtsignal alle von überkritischen Lichtkomponenten der Lichtemission stammenden Lichtkomponenten komplett löscht.

10. Verfahren nach einem der Ansprüche 1 bis 9, **dadurch gekennzeichnet, dass** die Betrachtungsvorrichtung (100) ein Vollfeld-Immersions-Objektiv (110) umfasst und die Filter (170) in einer hinteren Fokalebene (400) des Immersionsobjektivs (110) und/oder in einer mit der hinteren Fokalebene verbundenen Ebene (420) angeordnet sind.

11. Verfahren nach Anspruch 10, **dadurch gekennzeichnet, dass** die Filter (170) eine Blende (176) umfassen, die es in einer offenen Position erlaubt, von überkritischen Lichtkomponenten der Lichtemission stammende Lichtkomponenten des erfassten Lichtsignals durchtreten zu lassen, und die es in Abhängigkeit des Grads der Blendenöffnung (176) erlaubt, die von überkritischen Lichtkomponenten der Lichtemission stammenden Lichtkomponenten des erfassten Lichtsignals zu verdecken, die einen Winkel θ aufweisen, der größer als ein auf den Grad der Öffnung bezogener Grenzwert ist.

12. Verfahren nach einem der Ansprüche 1 bis 11, **dadurch gekennzeichnet, dass** die zu betrachtende Probe biologisch ist.

## Claims

1. A method for observing a light emission (14, 15) of a sample (10) in a medium (11) with a refractive index n_{L}, the sample being arranged on a surface (20a) of a transparent support (20) of refractive index nₛ, which is greater than n_{L}, the light emission comprising luminous components of a given amplitude and phase, oriented toward the support and forming an angle θ with a direction (20b) perpendicular to the surface (20a), among which, on the one hand, supercritical luminous components, for which the angle θ is strictly greater than a critical angle θ_{c} = arcsin(n_{L}/nₛ) and on the other hand, critical or subcritical luminous components, for which the angle θ is less than or equal to the critical angle θ_{c}, the method implementing an observation device (100) capable of:
- capturing at least part of the light emission from a region of interest of the sample and obtaining a captured luminous signal comprising luminous components arising from the supercritical luminous components of the light emission;
- applying filters (170) to the captured luminous signal in order to selectively decrease the amplitude and/or change the phase of some of the luminous components of the captured luminous signal to obtain a filtered light signal; and
- transforming the filtered luminous signal into an image zone of the region of interest of the sample;
the method being **characterized in that**:
- it realizes a modulation of the filtered luminous signal, in which luminous components arising from the critical or subcritical luminous components of the light emission are allowed to pass through in order to obtain image zones (6a, 6b) of one and the same region of interest of the sample, the modulation being applied to all or some of the luminous components of the captured luminous signal arising from the supercritical luminous components of the light emission; and
- at least one useful image zone (6c) of the sample is produced by combining the image zones (6a, 6b), the combination evidencing differences between the image zones (6a, 6b) associated with the modulation.

2. The method according to claim 1, **characterized in that** the luminous components of the captured luminous signal that are concerned with said modulation are arising from the supercritical luminous components of the light emission for which the angle θ is within a predetermined range in accordance with a range of depths to be explored in the sample.

3. The method according to any one of claims 1 or 2, **characterized in that** the image zones (6a, 6b) obtained by using the observation device (100) and generating, by combining, the useful image zone (6c) of the sample, are successively obtained by successively applying filters (170) to the captured luminous signal.

4. The method according to any one of claims 1 to 3, **characterized in that** it comprises the following steps:
a) capturing a plurality of image zones of one and same region of interest of the sample using the observation device (100) and a plurality of filters (170), each filter being used to capture one image zone of said plurality of image zones, the plurality of filters being such that:
- a filter of said plurality of filters allows the passing through of, in the filtered luminous signal, luminous components arising from the supercritical luminous components of the light emission;
- the filters of said plurality of filters all allow the luminous components of the captured luminous signal arising from the critical or subcritical luminous components of the light emission to pass through, and are effective substantially in a same way between them onto the luminous components of the captured luminous signal arising from the critical or subcritical luminous components of the light emission; and
- there are at least two filters of said plurality that are effective substantially in different ways between them onto the amplitude or the phase of at least some of the luminous components of the captured luminous signal arising from the supercritical luminous components of the light emission; and
b) producing a useful image zone of the sample by a calculation combining the plurality of image zones captured in step a) to evidence differences between the image zones of the plurality of image zones of the sample.

5. The method according to any one of claims 1 to 4, **characterized in that** it comprises the following steps:
a) capturing at least two image zones of a same region of interest of the sample using the observation device and two filters, each filter being used to capture one of the two image zones, the two filters being such that:
- one of the two filters allows the passing through, in the filtered luminous signal, of the luminous components arising from the supercritical luminous components of the light emission; and
- the other filter is effective substantially in the same way as said one of the two filters onto the luminous components of the captured luminous signal arising from the critical or subcritical luminous components of the light emission, and decreases substantially more than said one of the two filters the amplitude of at least some of the luminous components of the captured luminous signal arising from the supercritical luminous components of the light emission; and
b) producing a useful image zone of the sample by a calculation combining both image zones of the sample captured in step a), wherein the calculation comprises an algebraic difference between both image zones of the sample.

6. The method according to any one of claims 1 to 5, **characterized in that** the filters used also partially reduce the amplitude of all or some of the luminous components of the captured luminous signal arising from the critical and subcritical luminous components of the light emission.

7. The method according to any one of claims 1 to 6, **characterized in that** luminous components of the captured luminous signal arising from luminous components of the light emission that form the same angle θ are processed substantially in a same way by one and same filter for decreasing the amplitude or changing the phase.

8. The method according to any one of claims 1 to 7, **characterized in that**, the sample showing a phenomenon to be observed having a given critical time, the image zones are successively captured at time intervals of less than or equal to half of the critical time.

9. The method according to any one of claims 1 to 8, **characterized in that**:
- one of the image zones of the sample is obtained using a neutral filter that allows to pass through, in the filtered luminous signal and without any decrease of amplitude, all the luminous components of the captured luminous signal arising from the supercritical luminous components of the light emission; and
- another image zone of the sample is obtained with a total filter, which cancels in the filtered luminous signal all the luminous components arising from the supercritical luminous components of the light emission.

10. The method according to any one of claims 1 to 9, **characterized in that** the observation device (100) comprises a full-field immersion lens (110) and the filters (170) are located in a rear focal plane (400) of the immersion lens (110) and/or in a conjugate plane (420) of said rear focal plane.

11. The method according to claim 10, **characterized in that** the filters (170) comprise a diaphragm (176) that allows, in an open position, the passing through of luminous components of the captured luminous signal arising from the supercritical luminous components of the light emission and allows, depending on the degree of closure of the diaphragm (176), to obscure the luminous components of the captured luminous signal arising from the supercritical luminous components of the light emission having an angle θ greater than a limit value related to said degree of closure.

12. The method according to any one of claims 1 to 11, **characterized in that** the sample to be observed is biological.
